# EUROPEAN PATENT APPLICATION

(11) **EP 4 629 113 A1**
(43) Date of publication of application: **08.10.2025**
(21) Application number: 23916438.7
(22) Date of filing: 19.12.2023
(51) Int. Cl.: G06F 21/36, G06F 21/31, G06F 3/041

(54) **ELECTRONIC DEVICE AND METHOD FOR PROVIDING USER AUTHENTICATION**

(30) Priority: 10.01.2023 KR 20230003689
(71) Applicant: Samsung Electronics Co., Ltd., Suwon-si, Gyeonggi-do 16677 (KR)
(72) Inventor: KIM, Donguk, Suwon-si Gyeonggi-do 16677 (KR); HYUN, Suk, Suwon-si Gyeonggi-do 16677 (KR); KANG, Yonghwan, Suwon-si Gyeonggi-do 16677 (KR); KIM, Hyunkyung, Suwon-si Gyeonggi-do 16677 (KR); VALERIY, Prushinskiy, Suwon-si Gyeonggi-do 16677 (KR)
(74) Representative: Walaski, Jan Filip
(86) International application number: PCT/KR2023/020980
(87) International publication number: WO 2024/150955

(57) **Abstract**

The present disclosure relates to an electronic device and method for providing a user interface for user authentication. To this end, the electronic device may comprise a display configured to comprise a display area and edges of the display area. The electronic device may obtain a pattern corresponding to the movement of a target object, the movement being detected in at least some of the edges, and carry out user authentication on the basis of whether the obtained pattern matches with a preset target pattern. Various other embodiments are possible.

## Description

### [Technical Field]

The disclosure relates to an electronic device and method for providing a user interface (UI) for user authentication.

### [Background Art]

Advances in electronic technology lead to diversified electronic devices with enhanced performance. In particular, electronic devices come equipped with a display means capable of providing visual information to users such as televisions (TVs), mobile phones, personal computers (PCs), laptop computers, or tablet PCs.

The display means provided in the electronic device may include a touch input function in addition to the function of displaying visual information. In this case, the user may perform user authentication through the display means provided in the electronic device. For example, when user authentication is required, the electronic device may output a screen for user authentication through the display means and provide user authentication through information input by the user on the output screen. However, since the display means provided in the electronic device is generally exposed to the outside, the information entered by the user for authentication may be exposed to others.

### [Disclosure of Invention]

### [Technical Problem]

An embodiment of the disclosure may provide an electronic device and method for performing user authentication using the movement of a body portion or a writing device detected through a sensor.

An embodiment of the disclosure may provide an electronic device and method for performing user authentication using the movement of a target object detected in an area provided around the display for interaction with the user.

### [Technical Solution]

According to an embodiment of the disclosure, an electronic device may comprise a display unit configured to include a display area and an edge of the display area, a sensor unit configured to detect a movement of a target object in at least a portion of the edge, and at least one processor electrically connected to the display unit or the sensor unit and configured to perform an interaction with a user. The at least one processor may be configured to controls the display unit to display a user interface for requesting user authentication in the display area. The at least one processor may be configured to obtain a pattern corresponding to the movement of the target object detected from at least the portion of the edge by the sensor unit. The at least one processor may be configured to perform the user authentication in the displayed user interface based on whether the obtained pattern matches a preset target pattern. The pattern may be obtained by a vertical movement or a horizontal movement of the target object detected from at least the portion of the edge. The vertical movement may be detected by a movement of the target object along a vertical axis of the edge. The horizontal movement may be detected by a movement of the target object along a horizontal axis of the edge.

According to an embodiment of the disclosure, a method for controlling an electronic device may comprise displaying a user interface for requesting user authentication in a display area, and obtaining a pattern corresponding to a target object moving in at least a portion of an edge of the display area. The control method may comprise displaying the performing of the user authentication in the display area based on whether the obtained pattern matches a preset target pattern. The pattern may be obtained by a vertical movement or a horizontal movement of the target object detected from at least the portion of the edge. The vertical movement may be detected by a movement of the target object along a vertical axis of the edge. The horizontal movement may be detected by a movement of the target object along a horizontal axis of the edge.

### [Advantageous Effects]

According to an embodiment of the disclosure, it is possible to provide convenience to the user when inputting authentication information by performing user authentication based on a movement of a body portion or an input tool in an area provided at a position where the user may easily access around the display provided in the electronic device.

The technical objects of the disclosure are not limited to the foregoing, and other technical objects may be derived by one of ordinary skill in the art from example embodiments of the disclosure.

Effects of the present invention are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

### [Brief Description of Drawings]

FIG. 1 is an example view illustrating using an electronic whiteboard function in an electronic device according to an embodiment;
FIG. 2 is a block diagram schematically illustrating an electronic device according to an embodiment;
FIG. 3 is a block diagram illustrating in detail an electronic device according to an embodiment;
FIG. 4 is a control flowchart illustrating performing user authentication in an electronic device according to an embodiment;
FIG. 5A is a layout view illustrating areas provided for user interaction in an electronic device according to an embodiment;
FIG. 5B is an example view illustrating sensing by an infrared sensor provided to detect a movement of a target object in an electronic device according to an embodiment;
FIG. 5C is an example view illustrating a user movement for user authentication in a user interaction area provided in an electronic device according to an embodiment;
FIG. 6A is a view schematically illustrating a process of obtaining a movement pattern through user interaction in an electronic device according to an embodiment;
FIG. 6B is an example view illustrating that input information may be distinguished by an input method through user interaction in an electronic device according to an embodiment; and
FIGS. 7 to 11 illustrate examples of screens to be output when performing user authentication in an electronic device according to an embodiment.

In connection with the description of the drawings, the same or similar reference numerals may be used to denote the same or similar elements.

### [Mode for the Invention]

The terms used herein are briefly described, and the present invention is then described in detail.

For use in embodiments of the present invention, common terms widely used as possible have been chosen considering functions in the disclosure, but the terms may be varied depending on the intent of one of ordinary skill in the art or case laws or the advent of new technologies. Accordingly, the terms used herein should be determined based on their meanings and the overall disclosure, rather than by the terms themselves.

When an element "includes" another element, the element may further include the other element, rather excluding the other element, unless particularly stated otherwise. Further, the terms "unit," "module," or "part" as used herein denote a unit processing at least one function or operation, and a unit, module, or part may be implemented in hardware, software, or a combination thereof.

In the embodiments of the disclosure, the term "user" means a person who controls the function or operation of an image display device by a control device, and may include a viewer, an administrator, or an installer.

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

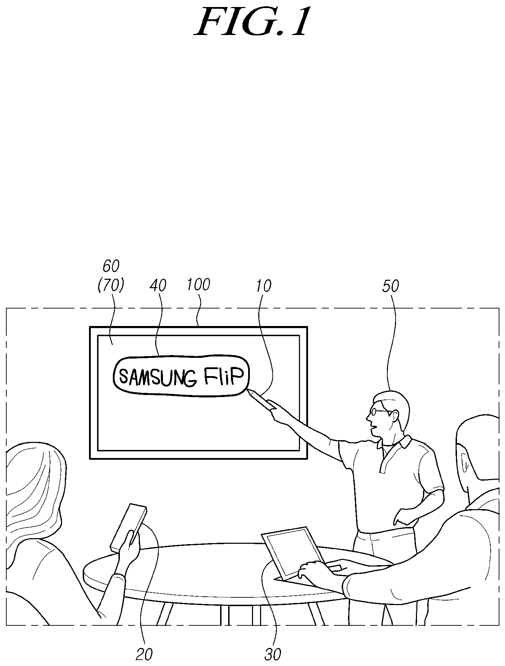

FIG. 1 is an example view illustrating using an electronic whiteboard function in an electronic device according to an embodiment.

Referring to FIG. 1, an electronic device 100 may be one of various types of devices. For example, the electronic device 100 may be one of a TV, a smartphone, a smart pad, a tablet PC, a personal digital assistance (PDA), a laptop PC, or a desktop PC. Hereinafter, for convenience of description, it is assumed that the electronic device 100 refers to an electronic device having an electronic whiteboard function.

The user may use the electronic whiteboard device more effectively by inputting a writing to the electronic whiteboard device and then applying various functions such as converting the writing input into text, capturing it as an image, or storing the content.

Meanwhile, according to an application executed on the electronic whiteboard device, the application may request user authentication. The user may perform user authentication with a separate input device. The user may perform user authentication by entering a password through an input/output interface (e.g., keyboard or number pad) connected to the electronic whiteboard device or a virtual keyboard displayed on the electronic whiteboard device. When the user performs user authentication through a virtual keyboard displayed on the display of the electronic whiteboard device, the password may be exposed to others, causing a security concern.

The electronic device 100 where the electronic board function is implemented may perform various operations. For example, the user 50 may input information (e.g., user authentication information) to the electronic device 100 using an input means such as a body portion (e.g., finger) or pen 10 (hereinafter referred to as 'input means 10'). For example, when the user 50 writes in the input area 60 using the input means 10, the electronic device 100 may convert the writing content in the input area 60 into an image or text and display the image or text on the display area 70. The electronic device 100 may detect the movement of the input means 10 by the user 50 in the input area 60, and obtain the writing content based on the detected movement of the input means 10. The input area 60 may be an area where information may be received from the user 50 by a sensor unit such as an infrared sensor module or a touch sensor module. The output area 70 may be an area where the electronic device 100 may output visual information. The input area 60 may be provided to overlap the display area 70, for example. The input area 60 may be provided to include, e.g., the display area 70. In this case, the input area 60 may include an area (hereinafter referred to as an 'interaction area') allocated or configured to perform an interaction with the user 50 for the purpose of user authentication.

As an example, the electronic device 100 may provide a predesignated function using writing content input by the user 50. In this case, the user 50 may use a desired function only by a writing input without the need to separately select a menu provided to perform a desired operation.

Hereinafter, a writing device (e.g., a pen or brush) or a body portion (e.g., the user's finger) that the user 50 may use to perform the user interaction including writing on the electronic device 100 is referred to as a 'target object'.

According to an example, when the user 50 writes 'SAMSUNG FLIP' using the target object 10 in the input area 60 of the electronic device 100, the electronic device 100 may determine the content of the writing by drawing a closed figure 40 surrounding the written text. The closed figure 40 surrounding 'SAMSUNG FLIP', which is the written text, may be referred to as a 'writing area' for determining the content of the writing.

According to an example, when the user 50 executes a specific application or a specific function menu (e.g., user setting), the electronic device 100 may output a screen requesting user authentication through the display area 70. Although not illustrated, when an event requiring user authentication occurs at the request of the user 50, the electronic device 100 may display an on-screen keyboard (hereinafter referred to as 'OSK') on the display area 70. The user 50 may input a password or pin code by a combination of letters, numbers, or special symbols by manipulating the OSK displayed on the display area 70. The electronic device 100 may perform user authentication on the user 50 by a password or a pin code input by the user 50. In this case, since the user 50 should directly manipulate the key provided in the OSK to input a password or pin code, there is a possibility that the password or pin code may be exposed to others. Therefore, the electronic device 100 may provide a user authentication method that may relatively lower the probability of being exposed to others, rather than a method where the user 50 directly inputs a password or a pin code through the OSK. For example, the electronic device 100 may allow (e.g., allocate or set) a portion of the input area 60 as an interaction area for user authentication, and determine whether the movement of the input means 10 by the user 50 detected in the interaction area is a preset pattern to determine whether to authenticate the user 50.

As an example, the electronic device 100 may connect to external devices 20 and 30 using a protocol such as a wireless direct communication method. In this case, the electronic device 100 may transmit and/or receive data with the external devices 20 and 30, or may implement data mirroring with the external devices 20 and 30.

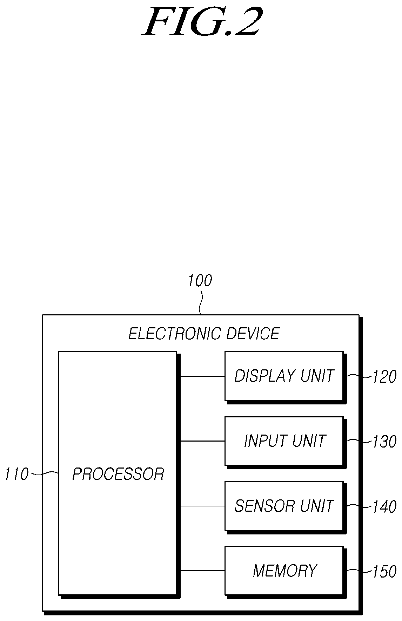

FIG. 2 is a block diagram schematically illustrating an electronic device (e.g., the electronic device 100 of FIG. 1) according to an embodiment.

Referring to FIG. 2, e.g., the electronic device 100 may include a processor 110, a display unit 120, an input unit 130, a sensor unit 140, or a memory 150. However, the electronic device 100 may be implemented by more components than the illustrated components, and is not limited to the above-described examples.

According to an embodiment, the display unit 120 may output data processed in the electronic device 100. The display unit 120 may display, e.g., information input to the electronic device 100 by the user (e.g., the user 50 of FIG. 1) through a writing. The display unit 120 may output a user interface (UI) provided by an application executed in the electronic device 100.

For example, the display unit 120 may include an input area (e.g., the input area 60 of FIG. 1) allowed (e.g., configured or allocated) to allow the user 50 to input information, or a display area (e.g., the display area 60 of FIG. 1) allowed (e.g., configured or allocated) to display various information. The input area 60 may include an interaction area where interaction with the user 50 is allowed for user authentication. The interaction area may be, e.g., a partial area of the display area 60 provided near one or more corners in the edge of the display area 70. For example, when the display area 70 is implemented in a rectangular shape, the interaction area may be set near at least one of four corners provided in the input area including the display area 70. For example, as the interaction area, an area provided near a corner positioned at the lower right of the input area 60 may be set.

According to an example, a specific input means (e.g., a touch screen) functioning as the input unit 130 may be integrally implemented in the display unit 120. In this case, the display unit 120 may be used as an input device in addition to the output device. For example, the display unit 120 may include at least one of a liquid crystal display, a thin film transistor-liquid crystal display, an organic light-emitting diode, a flexible display, a three-dimensional (3D) display, or an electrophoretic display.

According to an example, the input unit 130 is an interface for receiving the user input, and may receive a touch input using a touch sensitive element. The input of the user 50 that may be detected by the input unit 130 may include a touch input by a finger, a touch input by a palm, or an input by an electronic pen.

According to an example, the sensor unit 140 may monitor an operation state of the electronic device 100 or a peripheral state of the electronic device 100, and generate a detection signal corresponding to the monitoring result. For example, the sensor unit 140 may detect the user's voice, the user's image, or the user's interaction. For example, the sensor unit 140 may detect the movement of the target object (e.g., the input means 10 of FIG. 1) in the interaction area. The sensor unit 140 may include a touch sensor module or an infrared sensor module. The touch sensor module may be a set of electrical elements for detecting a movement such as pressing or dragging of the user 50 occurring on the touch panel. The infrared sensor module may be a set of electrical elements for detecting the movement of the target object by the user in an input area (e.g., the input area 60 of FIG. 1). The sensor unit 140 may include a microphone, a camera unit, or a light receiving unit.

According to an example, the touch sensor module may include at least one touch sensor. The touch sensor may detect a touch of the target object. The at least one touch sensor may be provided at a specific position of the electronic device 100, for example. For example, the touch sensor provided on the display unit 120 may detect an electrical signal generated according to the movement of the target object. The touch sensor provided on the manipulation unit (e.g., an operation switch) of the electronic device 100 may detect a touch of a button provided on the manipulation unit.

According to an example, the infrared sensor module may include at least one infrared sensor. The infrared sensor may be provided at an edge of the electronic device 100. For example, the infrared sensor may detect the user's movement or the target object moving on the display unit 120. The infrared sensor may be, e.g., a combination of a light emitting element and a light receiving element. The light emitting element may be disposed to face the light receiving element so that infrared rays generated by the light emitting element may easily reach the light receiving element.

According to an example, the sensor unit 140 may detect that the target object moves to the upper, lower, left, or right side along a vertical axis or a horizontal axis of the interaction area by a preset length.

According to an example, the memory 150 may include at least one type of storage medium of flash memory types, hard disk types, multimedia card micro types, card-type memories (e.g., secure digital (SD) or extreme digital (XD) memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an example, the memory 150 may store data necessary for operations performed in the electronic device 100. The data may be stored, e.g., in the form of a database (DB). As an example, the memory 150 may store at least one target gesture. The memory 150 may store, e.g., a table corresponding to an input gesture according to a direction and thickness of the target object. The table may be exemplarily represented as illustrated in Table 1.

**[Table 1]**

| target object movement direction 151 | width 153 of target object | pattern element 157 |
|---|---|---|
| upper | medium | m₁ |
| | narrow | m₁' |
| | broad | m₁" |
| lower | normal | m₂ |
| | narrow | m₂' |
| | broad | m₂" |
| Left | normal | m₃ |
| | narrow | m₃' |
| | broad | m₃" |
| Right | normal | m₄ |
| | narrow | m₄' |
| | broad | m₄" |

Table 1 may be a table stored as a database in the memory 150 by the electronic device 100 to derive a pattern element.

In Table 1, the movement direction 151 of the target object may be determined as the movement direction of the target object in the interaction area. The movement direction of the target object may be any one of an upper direction, a lower direction, the left direction, or a right direction. Hereinafter, for convenience of description, it is assumed that the target object moves in the upper direction and, when it moves in the lower, left, or right direction, it may be understood based on the following description.

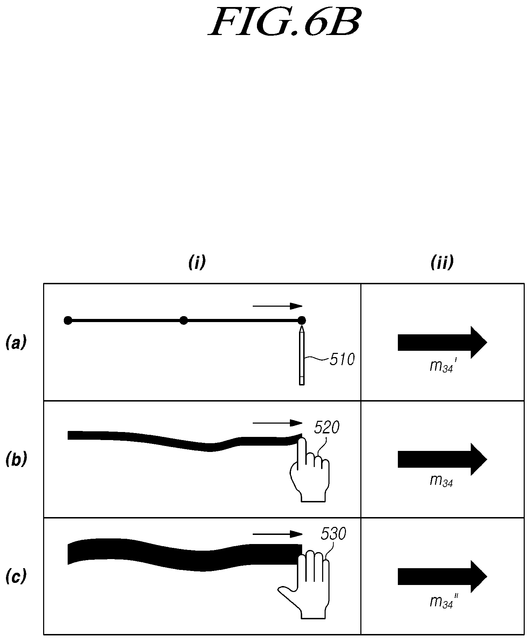

In Table 1, the width 153 of the target object may mean a horizontal width or a vertical width according to characteristics of the target object. When the target object moves in the horizontal direction, the width 153 of the target object may be a vertical width of the target object. When the target object moves in the vertical direction, the width 153 of the target object may be the horizontal width of the target object. The width 153 of the target object may be detected as an area detected according to the movement of the target object or a point through which the target object passes. This is described in FIG. 6B.

In Table 1, the pattern element 155 may be determined considering the movement direction 151 of the target object and the width 153 of the target object. The pattern element 155 refers to a unit element constituting a pattern. The pattern element 155 may include, e.g., the target object moving in the upper direction and m1, m1', and m1" according to the thickness of the target object. Here, m1, m1', and m1" may be or may not be the same as each other.

According to an example, the processor 110 may control the overall operation of the electronic device 100. The processor 110 may perform the function of the electronic device 100 to be described below by executing one or more instructions stored in the memory 150.

According to an example, the processor 110 may control the display unit 120 to display a user interface requesting user authentication in the display area (e.g., the display area 70 of FIG. 1).

According to an example, the processor 110 may obtain a pattern corresponding to the movement of the target object detected in the interaction area by the sensor unit 140. The pattern may be defined by a combination of the vertical movement or horizontal movement of the target object detected in the interaction area. The vertical movement may be detected according to the movement of the target object along the vertical axis of the corner portion provided as the interaction area. The horizontal movement may be detected according to the movement of the target object along the horizontal axis of the corner portion provided as the interaction area.

According to an example, the processor 110 may obtain a pattern element by detecting that the target object moves in the upper, lower, left, or right direction by a preset length along the vertical axis or the horizontal axis of the interaction area. The processor 110 may obtain an input pattern through a combination of the order or number of detected pattern elements. The pattern element may be obtained, e.g., by a single movement where the target object seamlessly continues in the interaction area.

According to an example, the processor 110 may sense a movement of the target object in a specific area corresponding to a portion of the input area 60 that may overlap the display area 70, and obtain a pattern according to the sensed movement.

According to an example, the processor 110 may perform user authentication based on whether the obtained pattern matches a target pattern. The target pattern may be preset by the user. The target pattern preset by the user may be stored in the memory 150. When the obtained pattern matches the target pattern, the processor 110 may approve authentication for the user. If the obtained pattern does not match the target pattern, the processor 110 may not approve authentication for the user.

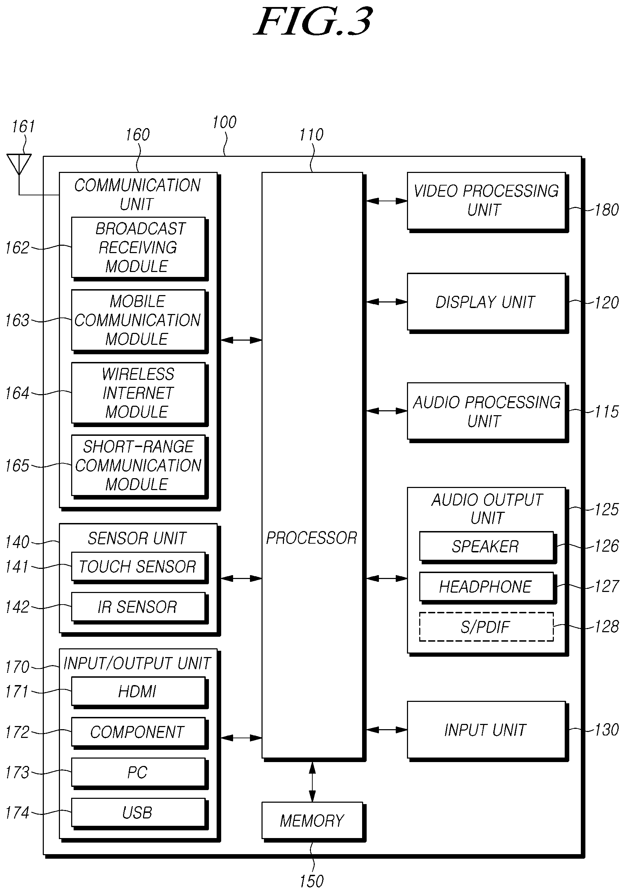

FIG. 3 is a detailed block diagram illustrating an electronic device (e.g., the electronic device 100 of FIG. 1) according to an embodiment.

Referring to FIG. 3, the electronic device 100 may further include at least one of an audio processing unit 115, an audio output unit 125, a communication unit 160, an input/output unit 170, or a video processing unit 180 in addition to the processor 110, the display unit 120, the input/output unit 130, the sensor unit 140, or the memory 150.

The processor 110, the display unit 120, the input unit 130, the sensor unit 140, or the memory 150 may be the same as described with reference to FIG. 2, and thus further description thereof is omitted.

The tuner unit 161 may include at least one antenna, and select and tune only the frequency of the channel to be received by the electronic device 100 among many radio wave components through amplification, mixing, resonance, or the like, on the received broadcast signal. The broadcast signal includes audio, video, and additional information (e.g., electronic program guide (EPG)).

The communication unit 160 may connect the electronic device 100 to an external device (e.g., an audio device, a mobile device, etc.) (e.g., the external devices 20 and 30 of FIG. 1) under the control of the processor 110. The communication unit 160 may transmit/receive content to/from the external devices 20 and 30, download an application from an external device (e.g., an external server), or perform web browsing.

The communication unit 160 may include one or more modules that enable wireless communication between the electronic device 100 and a wireless communication system or between the electronic device 100 and a network where another electronic device is positioned. For example, the communication unit 160 may include a broadcast receiving module 162, a mobile communication module 163, a wireless Internet module 164, or a short-range communication module 165. The communication unit 160 may be referred to as a transmission/reception unit.

The broadcast receiving module 162 receives a broadcast signal and/or broadcast-related information from an external broadcast management server through a broadcast channel. The broadcast signal may include not only a TV broadcast signal, a radio broadcast signal, or a data broadcast signal, but also a broadcast signal where a data broadcast signal is combined with a TV broadcast signal or a radio broadcast signal.

The mobile communication module 163 transmits and receives a wireless signal with at least one of a base station, an external terminal, or a server on a mobile communication network. The wireless signal may include various types of data according to transmission/reception of a voice signal, a video call signal, or a text/multimedia message.

The wireless Internet module 164 refers to a module for wireless Internet access, and may be built into or external to the device. As technologies for wireless Internet access, wireless LAN (WLAN) (Wi-Fi), wireless broadband (Wibro), world interoperability for microwave access (Wimax), or high speed downlink packet access (HSDPA) may be used. Through the wireless Internet module 164, the device may perform a Wi-Fi connection with another device. For example, the processor 110 may communicate with one or more access points (APs) using the wireless Internet module 164.

The short-range communication module 165 refers to a module for short-range communication. Near-field communication technologies supported by the near-field communication module 165 may include Bluetooth, radio frequency identification (RFID), infrared data association (IrDA), ultra-wide band (UWB), or ZigBee.

The sensor unit 140 may detect the user's voice, the user's image, or the user's interaction. The sensor unit 140 may include a touch sensor 141 or an infrared sensor 142. The sensor unit 140 may further include a light receiving unit, a microphone, or a camera unit.

The touch sensor 141 may be provided on the display unit 120. The touch sensor 141 may detect the user's touch. The touch sensor may be implemented as, e.g., a touch sensor module. The touch sensor may be implemented in a capacitive type, a pressure-sensitive type, or a resistance film type, for example. The touch sensor may detect the movement of the target object on the input area (e.g., the input area 60 of FIG. 1).

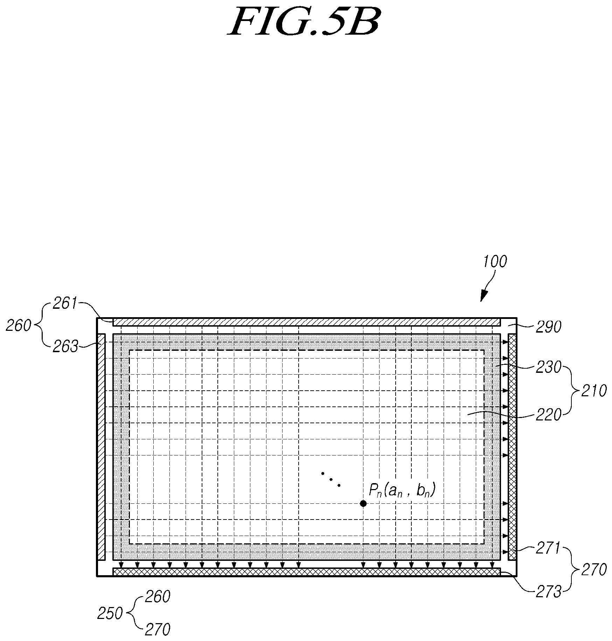

The infrared sensor 142 may be provided on the outer shell (edge or frame) of the electronic device 100 to detect movement of the target object. The infrared sensor 142 may be implemented as, e.g., an infrared sensor module. The infrared sensor 142 may include an infrared light emitting unit that emits infrared rays or an infrared light receiving unit that receives infrared rays emitted from the infrared light emitting unit. Infrared rays emitted in a linear direction from the infrared light emitting unit may be incident on the infrared light receiving unit provided at a position facing the infrared light emitting unit. When the target object passes between the infrared light emitting unit and the infrared light receiving unit, the infrared sensor may detect the movement of the target object by detecting that the infrared light is blocked by the target object. This is described in detail in FIG. 5B.

Although not illustrated, the light receiving unit that may be included in the sensor unit 140 may receive an optical signal (including a control signal) received from a remote control device (e.g., a remote control). The light receiving unit may receive an optical signal corresponding to a user input (e.g., touch, pressing, touch gesture, voice, or movement) from the control device. A control signal may be extracted from the received optical signal under the control of the processor 110.

Although not illustrated, a microphone that may be included in the sensor unit 140 receives the user's uttered voice. The microphone may convert the received voice into an electrical signal and output the electrical signal to the processor 110.

Although not illustrated, the camera unit that may be included in the sensor unit 140 may receive an image (e.g., continuous frames) corresponding to the user's movement including a gesture in a camera recognition range.

The input/output unit 170 may establish a connection with the external devices 20 and 30 under the control of the processor 110. The input/output unit 170 may receive video (e.g., moving pictures, etc.), audio (e.g., voice, music, etc.), or additional information (e.g., EPG) from the external devices 20 and 30, or transmit the same to the external devices 20 and 30. The input/output unit 170 may include one or a combination of a high-definition multimedia interface port 171, a component jack 172, a PC port 173, or a USB port 174.

The video processing unit 180 may process image data to be displayed by the display unit 120. For example, the video processing unit 180 may perform various image processing operations such as decoding, rendering, scaling, noise filtering, frame rate conversion, or resolution conversion on image data.

The display unit 120 may output a screen under the control of the processor 110. The display unit 120 may output, e.g., a broadcast signal or content (e.g., a video) data to a video screen under the control of the processor 110. The broadcast signal or the content data may be received from, e.g., the communication unit 160 or the input/output unit 170. The display unit 120 may output an image stored in the memory 150 to the screen under the control of the processor 110. The display unit 120 may output screens of the external devices 20 and 30 mirrored to the electronic device 100. The display unit 120 may output drawing data corresponding to the received drawing input.

When the display unit 120 has a layer structure with a touch pad to form a touch screen, the display unit 120 may function as an input device in addition to an output device. The display unit 120 may include at least one of, e.g., a liquid crystal display, a thin film transistor liquid crystal display, an organic light emitting diode, a flexible display, a three-dimensional display, or an electrophoretic display.

The audio processing unit 115 processes audio data. The audio processing unit 115 may perform various processes such as decoding, amplification, noise filtering, or the like on the audio data.

The audio output unit 125 may output an audio signal included in a broadcast signal or content data as an audible signal under the control of the processor 110. The audio output unit 125 may receive the broadcast signal or content data through the communication unit 160 or the input/output unit 170. The audio output unit 125 may read broadcast data or content data stored in the memory 150 to output an audio signal that is an audible signal. The audio output unit 125 may include at least one of a speaker 126, a headphone output terminal 127, or a Sony/Philips digital interface (S/PDIF) 128.

The input unit 130 may be a means for the user to input data for controlling the electronic device 100. The input unit 130 may include a touch input unit for receiving a touch input. For example, the input unit 130 may include, but is not limited to, a key pad, a dome switch, a touch pad (contact capacitive method, pressure method, resistance film method, infrared sensing method, surface ultrasonic conduction method, integral tension measurement method, piezo effect method, etc.), a jog wheel, a jog switch, etc.

The memory 150 according to an example may store a program for processing or controlling the processor 110. The memory 150 may store data input to the electronic device 100 or output from the electronic device 100.

As an example, the processor 110 may control the overall operation of the electronic device 100 or a signal flow between internal components of the electronic device 100. The processor 110 may perform a function of processing data according to the overall operation of the electronic device 100. The processor 110 may perform a function of processing data between internal components of the electronic device 100. When the user's input is present or a condition that is preset and stored is met, the processor 110 may execute an operating system (OS) or an application stored in the memory 150.

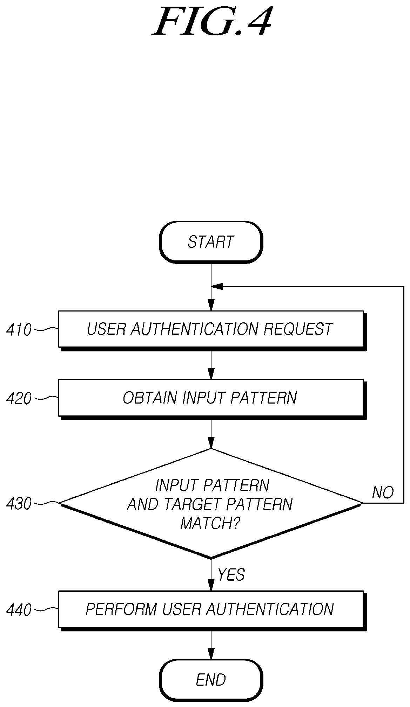

FIG. 4 is a control flowchart for performing user authentication in an electronic device (e.g., the electronic device 100 of FIG. 1) according to an embodiment.

Referring to FIG. 4, in operation 410, the electronic device 100 may display the user interface requesting authentication of the user account. For example, when an event where user authentication is requested occurs, the electronic device 100 may display the user interface provided for user authentication on the display (e.g., the display area 70 of FIG. 1) in response thereto. The user account may be, e.g., user account information required to execute a specific application in the electronic device 100. The electronic device 100 may authenticate the user account with separate authentication information corresponding to the user account information. The separate authentication information may be implemented in various forms, including, e.g., pin code, biometrics (e.g., fingerprint recognition, face recognition, iris recognition, vein recognition), or pattern input.

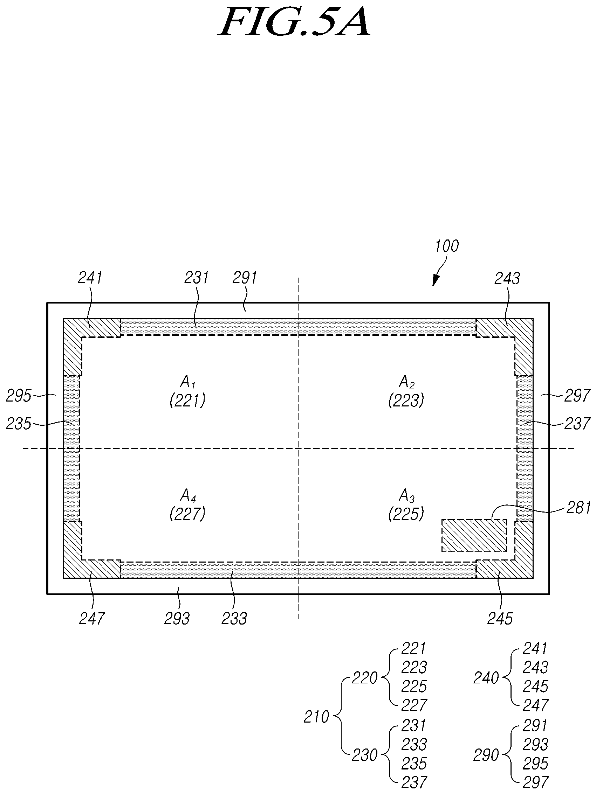

According to an example, in operation 420, the electronic device 100 may obtain an input pattern. The input pattern may be generated by a combination of movements generated by moving the target object (e.g., a pen, the user's body portion) in the interaction area (e.g., the interaction area 240 of FIG. 5A) of the electronic device 100. The interaction area 240 may be included in an input area (the input area 60 of FIG. 1). The interaction area 240 may mean an area near a corner among areas provided in the edge of the display (e.g., the display unit (e.g., the display unit 120 of FIG. 2) of the electronic device 100. The movement may include, e.g., a first movement of the target object in the upper direction along the vertical axis in the interaction area 240 or a second movement in the lower direction. The movement may include, e.g., a third movement of the target object in the left direction along the horizontal axis in the interaction area 240 or a fourth movement in the right direction. The input pattern may be generated by combining the order or count of the first to fourth movements. Here, one movement unit constituting the input pattern may be referred to as a "pattern element'. In addition to the first to fourth movements, a separate pattern element may be generated in an interaction area provided in a corner of an area other than the corner where the first to fourth movements are generated. The input pattern may be generated, e.g., by combining the pattern elements.

According to an example, at least two or more of the four corners provided in the electronic device 100 may be set as an interaction area. In this case, in addition to the first to fourth movements according to the movement of the target object in the first corner, the electronic device 100 may detect the fifth to eighth movements according to the movement of the target object in the second corner. The fifth movement may be a movement detected by moving the target object in the upper direction in the second corner. The sixth movement may be a movement detected by moving the target object in the lower direction in the second corner. The seventh movement may be a movement detected by moving the target object in the left direction in the second corner. The eighth movement may be a movement detected by moving the target object in the right direction in the second corner. In this case, the electronic device 100 may generate an input pattern by a combination of the first to eighth movements.

According to an example, the electronic device 100 may detect the width of the target object through the sensor unit 140. The electronic device 100 may consider information according to the detected width of the target object to perform user authentication. For example, the electronic device 110 may recognize the first movement by a wide target object and the first movement by a relatively narrow target object as different movements.

According to an example, the electronic device 100 may obtain a pattern according to the movement of the target object in a specific area (e.g., the interaction area) provided as a portion of the display area 60 of the display unit 120.

According to an embodiment, the electronic device 100 may display the OSK on the display unit 120. The OSK is a virtual keyboard displayed on a display. When the user 50 manipulates the virtual key included in the OSK, the electronic device 100 may obtain input information corresponding to the manipulation of the virtual key. The input information may be, e.g., an electrical signal corresponding to an input of a character, number, or direction key. The electronic device 100 may perform user authentication by combining the input information and a pattern element detected from the movement of the target object.

According to an example, in operation 430, the electronic device 100 may determine whether the input pattern and a target pattern match. The target pattern may be preset for the purpose of user authentication by the user 50. The preset target pattern may be stored in a memory (e.g., the memory 150 of FIG. 2).

When the input pattern and the target pattern match, the electronic device 100 may approve authentication for the user account in operation 440. If the input pattern and the target pattern do not match, the electronic device 100 may request to perform user authentication again in operation 410.

In addition to those illustrated, the electronic device 100 may perform an additional operation to implement the disclosure, or at least a portion of the illustrated operations may be omitted, and at least a portion of the illustrated operations may be repeatedly performed.

FIG. 5A is a layout view illustrating areas provided for user interaction in an electronic device (e.g., the electronic device 100 of FIG. 1) according to an embodiment of the disclosure. In the following description, for convenience of description, the case where the electronic device 100 has a quadrilateral shape (e.g., a rectangle) is described as an example. However, the electronic device 100 may have various shapes other than quadrilateral.

Referring to FIG. 5A, the electronic device 100 may include a display 210 or a frame 290. The display 210 may entirely or partially correspond to the display unit 120 of FIG. 2.

According to an example, the frame 290 may constitute the exterior of the electronic device 100. The frame 290 may form an outer bezel of the electronic device 100. The frame 290 may be composed of, e.g., a combination of at least one of metal, synthetic resin (e.g., plastic), or ceramic. The frame 290 may cover a portion (e.g., the edge area 230) of the edge of the display 210, or may contact the edge of the display 210. For example, the frame 290 may include a first frame 291, a second frame 293, a third frame 295, or a fourth frame 297. The first frame 291 may be, e.g., a frame provided on the upper side of the electronic device 100. The second frame 293 may be, e.g., a frame provided on the lower side of the electronic device 100. The third frame 295 may be, e.g., a frame provided on the left side of the electronic device 100. The fourth frame 297 may be, e.g., a frame provided on the right side of the electronic device 100.

According to an example, the display 210 may include a display area 220 (e.g., the display area 70 of FIG. 1) or an input area (e.g., the input area 60 of FIG. 1). The input area 60 may include the whole or part of the display area 220. The input area 60 may include an edge area 230. The display area 220 may display input information such as content or writing. The display area 220 may display, e.g., an application, text, audio or video content, or a handwriting input by the user. The display area 220 may occupy most of the area of the display 210. The display area 220 may be divided into at least one or more areas. The display area 220 may include, e.g., a first display area 221, a second display area 223, a third display area 225, or a fourth display area 227. The display area 220 is not limited to those illustrated, and may be divided into more or less areas, and each of the divided display areas may have any size.

According to an example, the border area 230 may correspond to a portion of the display 210 where content or the like is not displayed. Therefore, the edge area 230 may be provided in the edge of the display area 220. The edge area 230 may be implemented integrally with or independently from the display area 220.

According to an example, the edge area 230 may be positioned in the edge of the display 220. The border area 230 may determine a boundary line of the display 220. A touch panel may be provided in the edge area 230.

According to an example, the electronic device 100 may determine whether the content displayed on the display area 220 may be scrolled in an upward/downward direction or a vertical direction. The content displayed on the display area 220 may include, e.g., content disposed in the vertical direction or content disposed in the horizontal direction. For example, when content arranged long in the vertical direction is displayed on the display area 220 according to the width in the horizontal direction, only a portion of the content in the vertical direction may be displayed. For example, when content disposed long in the horizontal direction is displayed on the display area 200 according to the width in the vertical direction, only a portion of the content in the vertical direction may be displayed.

According to an example, if the electronic device 100 determines whether the content displayed on the display area 220 may move in the horizontal direction or the vertical direction, the electronic device 100 may move the content displayed in the corresponding direction by detecting the target object moving in at least a portion of the edge area 230. For example, if the electronic device 100 determines that the content displayed on the display area 220 may move in the horizontal direction, and the electronic device 100 detects the target object moving in the horizontal direction (e.g., left or right direction) in the edge area 230, the electronic device 100 may move the content in the corresponding direction (e.g., the direction of the target object moving in the left or right direction). For example, if the electronic device 100 determines that the content displayed on the display area 220 may move in the vertical direction, and the electronic device 100 detects the target object moving in the vertical direction (e.g., upper or lower direction) in the edge area 230, the electronic device 100 may move the content in the corresponding direction (e.g., the direction of the target object moving in the upper or lower direction).

According to an example, the edge area 230 may include at least one divided section. The edge area 230 may include, e.g., a first edge area 231, a second edge area 233, a third edge area 235, or a fourth edge area 237. The first edge area 231 may be an edge area provided on the upper side of the electronic device 100. The second edge area 233 may be an edge area provided on the lower side of the electronic device 100. The third edge area 235 may be an edge area provided on the left side of the electronic device 100. The fourth edge area 237 may be an edge area provided on the right side of the electronic device 100.

According to an example, an interaction area 240 may be provided in each corner of the edge area 230. The interaction area 240 may be an area for performing the user authentication function provided by the electronic device 100. For example, the user may manipulate the interaction area 240 to call up a tool bar required to use the electronic device 100. For example, the electronic device 100 may display the tool bar on the display 210 through a swipe-up (or swipe-down) on a predetermined area of the interaction area 240 performed by the user's manipulation. For example, the electronic device 100 may perform a preset operation through an operation of swiping on a predetermined area of the interaction area 240 performed by the user's manipulation. Further, the preset operation may be performed through a gesture generated by dragging the user's specific pattern. The interaction area 240 is not limited to each illustrated corner, and may correspond to the whole or part of the edge area 230. The interaction area 240 may be set as a specific section of the edge area 230 by the user, for example. For example, when the interaction area 240 is set as a specific section of the edge area 230, the electronic device 100 may obtain only the movement of the target object detected in the interaction area 240 as a pattern for user authentication. The electronic device 100 may not obtain the movement of the target object detected in the edge area 230 except for the interaction area 240 as a pattern for user authentication.

According to an example, the interaction area 240 may include a first interaction area 241, a second interaction area 243, a third interaction area 245, or a fourth interaction area 247.

For example, the first interaction area 241 may be formed to extend a predetermined distance to each edge area from near the corner where the first edge area 231 and the third edge area 235 meet.

For example, the second interaction area 243 may be formed to extend a predetermined distance to each edge area from near the corner where the first edge area 231 and the fourth edge area 237 meet.

For example, the third interaction area 245 may be formed to extend a predetermined distance to each edge area from near the corner where the second edge area 233 and the fourth edge area 237 meet.

For example, the fourth interaction area 247 may be formed to extend a predetermined distance to each edge area from near the corner where the second edge area 233 and the third edge area 235 meet.

According to an example, a touch sensor may be provided in the interaction area 240. The movement of the target object in the upper, lower, left, or right direction according to the touch signal detected by the touch sensor may be detected. The electronic device 100 may obtain a movement pattern of the target object based on the movement detected in the interaction area 240. The touch sensor may be implemented as, e.g., a touch sensor module. The touch sensor module may be disposed on the rear surface of the display 210 along the edge area 230.

According to an example, the electronic device 100 may obtain an input pattern according to the target object moving in a user-designated area 281 of the display area 220. The user-designated area 281 may be provided in the display area 220 of the display 210. The user-designated area 281 may be provided at any point of the display area 220. The user-designated area 281 may have a predetermined area. Although not illustrated, the user-designated area 281 may be implemented as a plurality of areas in the display area 220.

For example, the electronic device 100 may obtain the input pattern obtained in the user-designated area 281 as the same pattern as the input pattern obtained in the interaction area 240, or as a different pattern.

FIG. 5B is an example view illustrating sensing by an infrared sensor provided to detect a movement of a target object in an electronic device (e.g., the electronic device 100 of FIG. 1) according to an embodiment.

Referring to FIG. 5B, the electronic device 100 may include an infrared sensor 250. The infrared sensor 250 may be implemented as, e.g., an infrared sensor module. For example, the infrared sensor 250 may include an infrared light emitting unit 260 or an infrared light receiving unit 270. The infrared light emitting unit 260 may emit infrared rays in a linear direction. The infrared light receiving unit 270 may receive infrared rays emitted from the infrared light emitting unit 260.

According to an example, the infrared light emitting unit 260 may include one or more infrared light emitting elements. The plurality of infrared light emitting elements may be disposed to be spaced apart at predetermined distance intervals, for example. The infrared light emitting element may emit infrared rays in a linear direction, for example. For example, the infrared light emitting unit 260 may include a first infrared light emitting unit 261 or a second infrared light emitting unit 263. The first infrared light emitting unit 261 may be provided on the upper side of the electronic device 100. The first infrared light emitting unit 261 may be provided along the first edge area 291, for example. The second infrared light emitting unit 261 may be provided on the left side of the electronic device 100. The second infrared light emitting unit 263 may be provided along the third edge area 295, for example.

According to an example, the infrared light receiving unit 270 may include one or more infrared light receiving elements. The plurality of infrared light receiving elements may be disposed to be spaced apart at predetermined distance intervals, for example. The infrared light receiving element may receive, e.g., infrared rays emitted from the infrared light emitting element. The infrared light receiving element may be disposed on a straight line while facing the infrared light emitting element, for example. For example, the infrared light receiving unit 270 may include a first infrared light receiving unit 271 or a second infrared light receiving unit 273. The first infrared light receiving unit 271 may be provided on the lower side of the electronic device 100. The first infrared light receiving unit 271 may be provided along the second edge area 293, for example. The second infrared light receiving unit 273 may be provided on the right side of the electronic device 100. The second infrared light receiving unit 273 may be provided along the fourth edge area 297, for example.

However, without limitations to the illustration, the arrangement direction or arrangement position of the infrared light emitting unit 260 or the infrared light receiving unit 270 may be applied in various ways. For example, positions at which the infrared light emitting unit 260 or the infrared light receiving unit 270 are disposed may be exchanged with each other. For example, the infrared light emitting elements and the infrared light receiving elements of the infrared sensor module implemented as the infrared sensor 250 may be intersected and disposed.

According to an example, the infrared light emitting unit 260 may include one or more infrared light emitting elements. The infrared light emitting element may emit infrared rays in a linear direction, for example. For example, the infrared light emitting unit 260 may include a first infrared light emitting unit 261 or a second infrared light emitting unit 263. The first infrared light emitting unit 261 may be provided on the upper side of the electronic device 100. The first infrared light emitting unit may be provided along the first edge area 291, for example. The second infrared light emitting unit 263 may be provided on the left side of the electronic device 100. The second infrared light emitting unit 263 may be provided along the third edge area 295, for example.

According to an example, infrared rays radiated in a straight line from the first infrared light emitting unit 261 disposed in the horizontal direction and the second infrared light emitting unit 263 disposed in the vertical direction may meet each other to form a plurality of coordinates in a grid shape. The horizontal first infrared rays emitted from the plurality of infrared light emitting elements included in the first infrared light emitting unit 261 may form a plurality of coordinates facing the vertical infrared rays emitted from the plurality of infrared light emitting elements included in the second infrared light emitting unit 263. The plurality of coordinates may have unique coordinates for each point. For example, the point where the infrared ray emitted from the infrared light emitting element positioned at the nth point in the right direction from the upper left end and the infrared ray emitted from the infrared light emitting element positioned at the nth point in the lower direction from the upper left end cross each other may be referred to as Pₙ. The crossing point Pₙ may have a coordinate of aₙ in the horizontal direction and a coordinate of bₙ in the vertical direction. Here, n is an integer larger than or equal to 1. n may be determined according to the number of modules included in the infrared light emitting unit 260 or the infrared light receiving unit 270.

According to an example, the electronic device 100 may detect a movement of the target object by the infrared sensor 250. As the target object moves on the display 210, infrared rays emitted from at least one infrared light emitting module 260 may be blocked from entering the infrared light receiving module 270. The movement of the target object may be detected by considering the coordinates of infrared rays blocked by the above-described method.

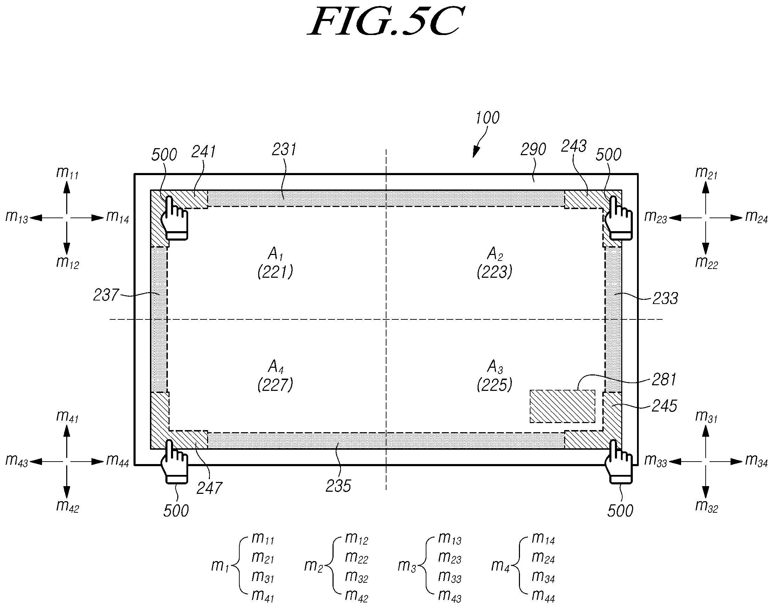

FIG. 5C is an example view illustrating a user movement for user authentication in a user interaction area provided in an electronic device (e.g., the electronic device 100 of FIG. 1) according to an embodiment.

Referring to FIG. 5C, the electronic device 100 may detect a movement of the target object 500 by the infrared sensor 250 or the touch sensor. Hereinafter, a pattern corresponding to the movement of the target object 500 may be referred to as an input pattern. The input pattern may include a first movement m₁ as the target object 500 moves in the upper direction by a preset length along the vertical axis of the interaction area 240. The input pattern may include a second movement m₂ as the target object 500 moves in the lower direction in a preset length along the vertical axis of the interaction area 240. The input pattern may include a third movement m₃ as the target object 500 moves in the left direction by a preset length along the horizontal axis of the interaction area 240. The input pattern may include a fourth movement m4 as the target object 500 moves in the right direction by a preset length along the horizontal axis of the interaction area 240. Further, the input pattern may include an operation preset by the user. For example, the input pattern may include a signal generated when the target object 500 clicks or taps any point in the interaction area 240. The first to fourth movements m₁, m₂, m₃, and m₄ constituting the input pattern may be referred to as pattern elements.

According to an example, the input pattern may be configured by a combination of the occurrence order or occurrence count of the first movement m₁, the second movement m₂, the third movement m₃, or the fourth movement m₄. For example, if the target object 500 moves in the interaction area 240 in the upper, upper, lower, right, right, and left direction, the input pattern of m₁, m₁, m₂, m₄, m₄, and m₃ may be obtained.

According to an example, the electronic device 100 may obtain different pattern elements according to the position of the interaction area 240. For example, the electronic device 100 may obtain pattern elements m₁₁, m₁₂, m₁₃, and m₁₄ according to the movement of the target object 500 in the upper, lower, left, and right directions, respectively, in the first interaction area 241. The electronic device 100 may obtain pattern elements m₂₁, m₂₂, m₂₃, and m₂₄ according to the movement of the target object 500 in the upper, lower, left, and right directions, respectively, in the second interaction area 243. The electronic device 100 may obtain pattern elements m₃₁, m₃₂, m₃₃, and m₃₄ according to the movement of the target object 500 in the upper, lower, left, and right directions, respectively, in the third interaction area 245. The electronic device 100 may obtain pattern elements m₄₁, m₄₂, m₄₃, and m₄₄ according to the movement of the target object 500 in the upper, lower, left, and right directions, respectively, in the fourth interaction area 247.

According to an example, the first movements m₁₁, m₂₁, m₃₁, and m₄₁ according to the movement in the upper direction movement in the respective areas (e.g., the first interaction area 241 to the fourth interaction area 247) of the interaction area 240 may be the same or different pattern elements according to the user's setting. For example, the first movement m11 of the target object in the upper direction in the first interaction area 241 and the first movement m21 of the target object in the upper direction in the second interaction area 243 may be the same or different from each other. This may also be applied to the second movements m₁₂, m₂₂, m₃₂, and m₄₂, the third movements m₁₃, m₂₃, m₃₃, and m₄₃, or the fourth movements m₁₄, m₂₄, m₃₄, and m₄₄.

According to an example, the electronic device 100 may obtain an input pattern according to the target object 500 moving in the user-designated area 281 of the display area 220. The user-designated area 281 may be provided in the display area 220 of the display 210. The user-designated area 281 may be provided at any point of the display area 220. The user-designated area 281 may have a predetermined area. Although not illustrated, the user-designated area 281 may be implemented as a plurality of areas in the display area 220.

According to an example, the electronic device 100 may obtain a pattern generated through movement (e.g., movement in the upper, lower, left, or right direction) of the target object 500 moving in the display area 220. The electronic device 100 may detect the movement of the target object 500 through a touch sensor provided in the user-designated area 281, or may detect the movement of the target object 500 through the infrared sensor 250 provided in the electronic device 100. The electronic device 100 may obtain the input pattern obtained in the user-designated area 281 as the same pattern as the input pattern obtained in the interaction area 240, or as a different pattern.

According to an example, various combinations of input patterns may be obtained according to the target object 500 moving in the first to fourth interaction areas 241, 243, 245, and 247 included in the interaction area 240. Accordingly, security may be enhanced in user authentication in the electronic device 100.

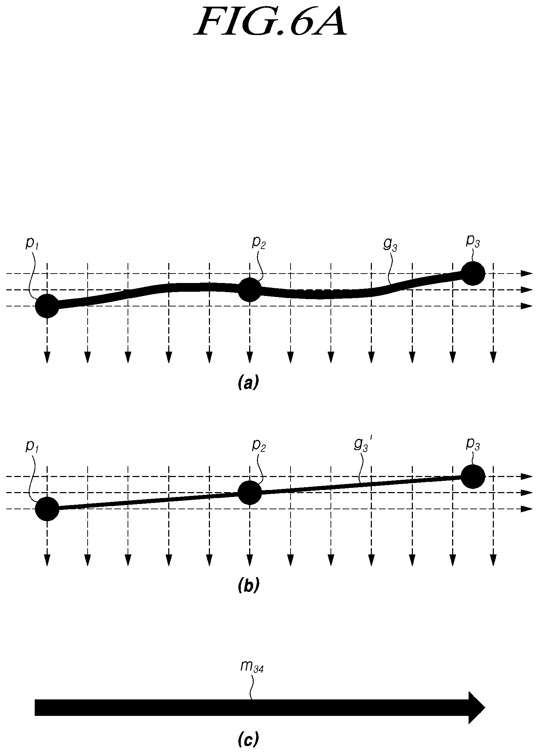

FIG. 6A is a view schematically illustrating a process of obtaining a movement pattern through user interaction in an electronic device (e.g., the electronic device 100 of FIG. 1) according to an embodiment.

Referring to FIG. 6A, (a) illustrates an actual input g₄ according to the movement of the target object. The actual input g₄ may indicate a position passed as the target object moves in the interaction area (e.g., the interaction area 240 of FIG. 5A). The actual input g₄ may include, e.g., at least a plurality of points. The plurality of points may coincide with, e.g., a first crossing point P₁, a second crossing point P₂, or a third crossing point P₃. The actual input g₄ may sequentially pass through the first to third crossing points P₁, P₂, and P₃. The first to third crossing points P₁, P₂, and P₃ may be one of grid points generated as horizontal infrared rays emitted by the infrared sensor (e.g., the infrared sensor 250 of FIG. 5B) and horizontal infrared rays cross each other.

According to an example, (b) illustrates a line corrected by the electronic device 100 as a straight input g₄' by applying interpolation to the actual input g₄. The straight input g₄' may be implemented by a straight line passing through the first to third crossing points P₁, P₂, and P₃, or may be implemented by applying a linear regression analysis method to a set of points forming a path passed by the actual input g₄. The actual input g₄ may be represented, e.g., in the form of a linear function having a predetermined slope and passing at least two or more of the first to third crossing points P₁, P₂, and P₃.

According to an example, in (c), the electronic device 100 may convert the straight input g₄' into a pattern element. The electronic device 100 may convert it into an in the upper-, lower-, left-, or right-direction pattern element based on the slope of the straight input g₄'. For example, if the slope of the straight input g₄' is 7.5 degrees, the straight input g₄' may be converted into a pattern element in the right direction. For example, if the slope of the straight input g₄' is 45 degrees or more and less than 135 degrees, the straight input g4' may be converted into a pattern element in the upper direction. When the slope of the straight input g₄' is larger than or equal to 135 degrees and less than 225 degrees, the straight input g₄' may be converted into a pattern element in the left direction. When the slope of the straight input g₄' is larger than or equal to 225 degrees and less than 315 degrees, the straight input g₄' may be converted into a pattern element in the lower direction. When the slope of the straight input g₄' is larger than or equal to 0° and less than 45°, or larger than or equal to 315° and less than 360°, the straight input g₄' may be converted into a pattern element in the right direction.

FIG. 6B is an example view illustrating that input information may be distinguished by an input method through user interaction in an electronic device 100 according to an embodiment.

Referring to FIG. 6B, the vertical drawing in column (i) illustrates an actual input (e.g., the actual input g₄ of FIG. 6A) according to various widths of the target object 500. The target object 500 refers to any medium by which the user manipulates the electronic device 100. The target object 500 may include a first target object 510, a second target object 520, or a third target object 530. The first target object 510 may correspond to, e.g., an electronic pen capable of manipulating the electronic device 100. The second target object 520 may correspond to, e.g., the user's finger. The third target object 520 may correspond to, e.g., the user's palm. The width of the actual input recognized as the first target object 510, the second target object 520, or the third target object 520 moves may differ. The electronic device 100 may detect the width of the target object 500 according to the number of crossing points provided in the vertical direction or the horizontal direction through which the target object 500 moves and passes. For example, it is possible to detect that the widths increase from the first target object 510 to the third target object 530 by detecting that there is one crossing point in the vertical direction in which the first target object 510 moves and passes in the right direction, there are three crossing points in the vertical direction in which the second target object 520 moves and passes in the right direction, and there are five crossing points in the vertical direction in which the third target object 530 moves and passes in the right direction.

According to an example, the vertical drawing in column (ii) illustrates obtaining a pattern element corresponding to the width of the target object 500. For example, the electronic device 100 may obtain a pattern element m₃₄ as the second target object 520 moves in the right direction on the third interaction area 245. For example, the electronic device 100 may obtain a pattern element m₃₄' as the first target object 510 moves in the right direction on the third interaction area 245. For example, the electronic device 100 may obtain a pattern element m₃₄" as the third target object 530 moves in the right direction on the third interaction area 245. Here, m₃₄, m₃₄', or m₃₄" may or may not be the same. By setting the m₃₄, m₃₄', or m₃₄" as different, combinations configuring the input pattern may be diversified. Therefore, the security of the user authentication means provided by the electronic device 100 may be enhanced.

Although not illustrated, the pattern elements according to the movements of the target objects having different widths (e.g., the first target object 510, the second target object 520, or the third target object 530) in the upper, lower, or left direction on the interaction area 240 may also be described in the same manner.

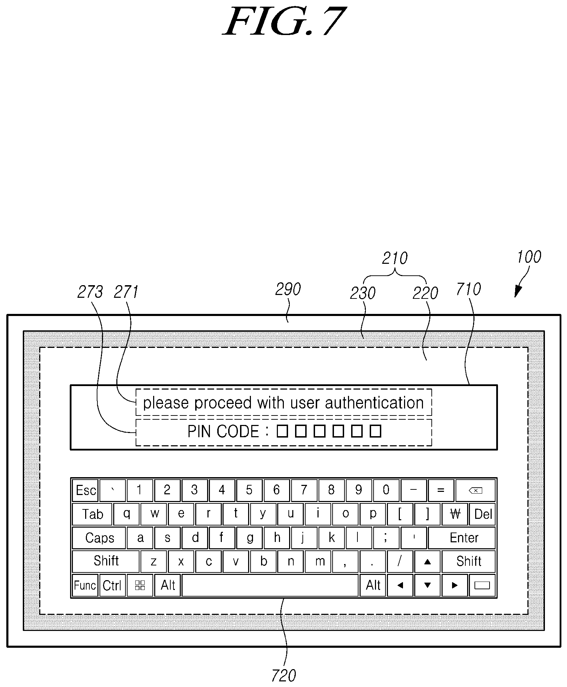

FIGS. 7 to 11 illustrate examples of screens to be output when performing user authentication in an electronic device 100 according to an embodiment.

Referring to FIG. 7, the electronic device 100 may display a first UI 710 for performing user authentication on the display area 220. The first UI 710 may include a phrase 711, such as "Please proceed with user authentication." The first UI 710 may include, e.g., a phrase 713 indicating a pin code for user authentication. The pin code may be configured by, e.g., combining at least one of at least one pattern element, at least one character or number, at least one direction key, or at least one wheel key. Here, the characters or numbers may be input through a separate input interface (e.g., keyboard, mouse, number pad, wheel pad) connected to the electronic device 100, or through a virtual keyboard (on-screen keyboard (OSK)) 720 displayed on the display area 220. Hereinafter, it is assumed that the pin code is configured by combining only pattern elements and is configured by combining six-digit pattern elements.

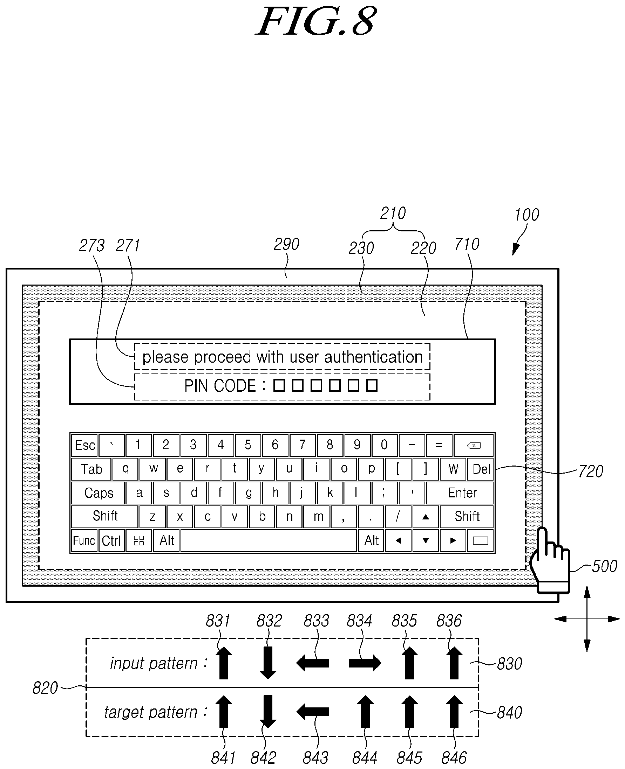

Referring to FIG. 8, the user may input the pin code using the target object 500. The user may generate the input pattern 830 by combining pattern elements obtained by moving the target object 500 in the interaction area 240. For example, an input pattern 830 where the target object 500 moves in the interaction area 240 in the order of an upper side 831, a lower side 832, a left side 833, a right side 834, an upper side 835, and an upper side 836 may be generated.

According to an embodiment, the electronic device 100 may compare the input pattern 830 with the target pattern 840. The target pattern 840 may be a pin code preset by the user. The electronic device 100 may store the target pattern 840 in a memory (e.g., the memory 150 of FIG. 2). For example, the target pattern may be generated by moving the target object 500 in the order of an upper side 841, a lower side 842, a left side 843, an upper side 844, an upper side 845, and an upper side 846. The electronic device 100 may identify that the target pattern 840 and the input pattern 830 do not match.

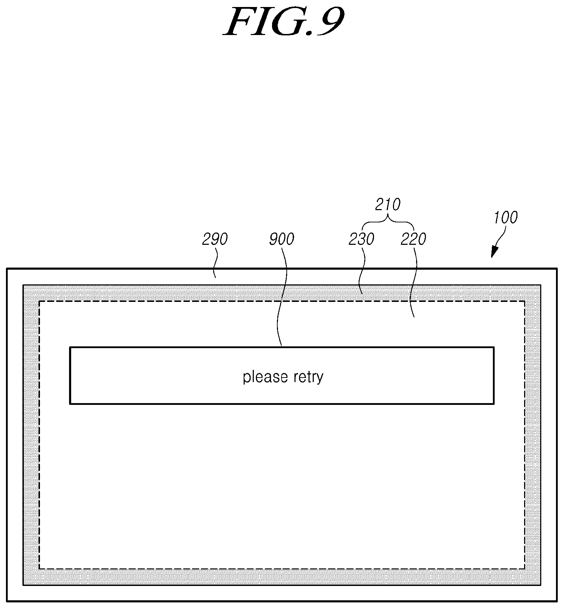

Referring to FIG. 9, the electronic device 100 may display a second UI 900 indicating an authentication failure on the display area 220 based on the mismatch between the target pattern 840 and the input pattern 830.

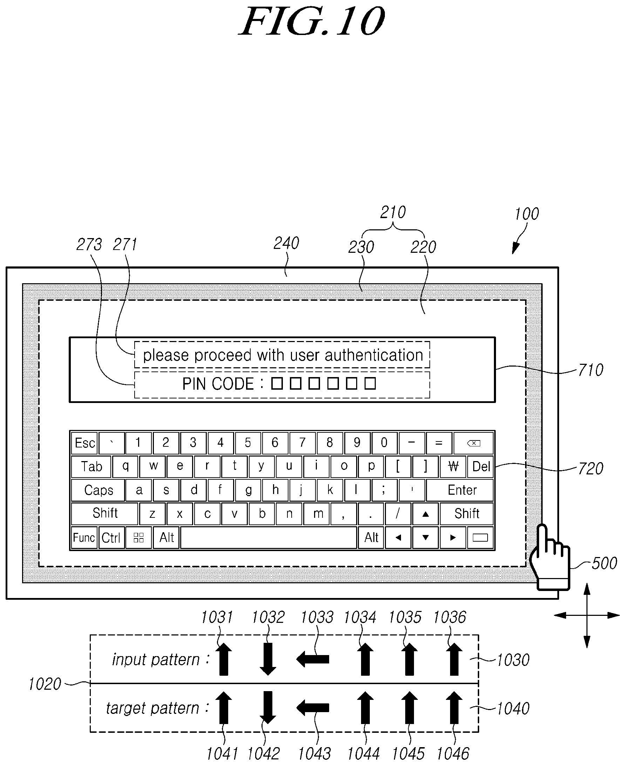

Referring to FIG. 10, in the electronic device 100, the user may input a pin code using the target object 500. The user may generate the input pattern 1030 by combining pattern elements obtained by moving the target object 500 in the interaction area 240. For example, an input pattern 830 where the target object 500 moves in the interaction area 240 in the order of an upper side 1031, a lower side 1032, a left side 1033, an upper side 1034, an upper side 1035, and an upper side 1036 may be generated.

According to an embodiment, the electronic device 100 may compare the input pattern 1030 with the target pattern 1040. The target pattern 1040 may be a pin code preset by the user. The electronic device 100 may store the target pattern 1040 in a memory (e.g., the memory 150 of FIG. 2). For example, the target pattern may be generated by moving the target object 500 in the order of an upper side 1041, a lower side 1042, a left side 1043, an upper side 1044, an upper side 1045, and an upper side 1046. The electronic device 100 may identify that the target pattern 1040 match the input pattern 1030.

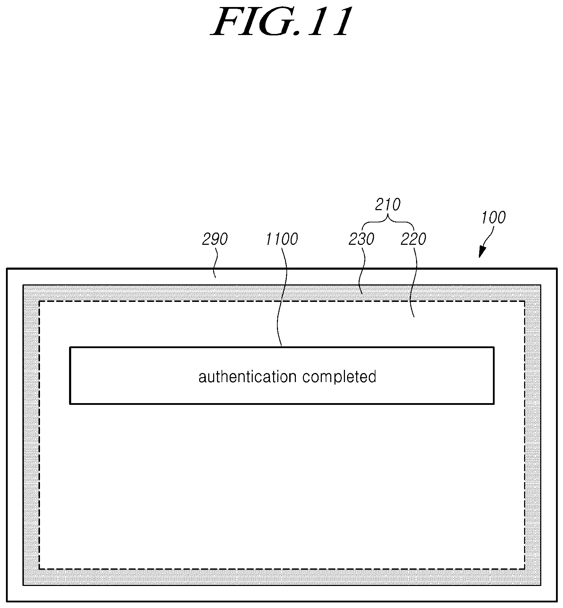

Referring to FIG. 11, the electronic device 100 may display a third UI 1100 indicating an authentication success on the display area 220 based on the match between the target pattern 1040 and the input pattern 1030. The third UI 1100 may be, e.g., 'authentication has been completed.'

An electronic device 100 according to an embodiment of the disclosure may comprise a display unit 120, 210 configured to include a display area 220 and an edge 230 of the display area 220, a sensor unit 140 configured to detect a movement of a target object 500 in at least a portion of the edge 230, and at least one processor 110 electrically connected to the display unit 120, 210 or the sensor unit 140 and configured to perform an interaction with a user. The at least one processor 110 may be configured to control the display unit 120, 210 to display a user interface for requesting user authentication in the display area 220, obtain a pattern corresponding to the movement of the target object 500 detected from at least the portion of the edge 230 by the sensor unit 140, and perform the user authentication in the displayed user interface based on whether the obtained pattern matches a preset target pattern. Here, the pattern may be obtained by a vertical movement or a horizontal movement of the target object 500 detected from at least the portion of the edge 230. The vertical movement may be detected by a movement of the target object 500 along a vertical axis of the edge 230. The horizontal movement may be detected by a movement of the target object 500 along a horizontal axis of the edge 230.

In the electronic device 10 according to an embodiment of the disclosure, the at least one processor 110 may be configured to, if the display area 220 is rectangular, set a lower right corner 245 among four corners 241, 243, 245, 247 included in the edge 230 as an interaction area 240, and obtain the pattern corresponding to the movement of the target object 500 in the interaction area 240.

In the electronic device 10 according to an embodiment of the disclosure, the at least one processor 110 may be configured to detect a first movement m₁ of the target object 500 in an upper direction by a preset first length along the vertical axis or a second movement m₂ of the target object in a lower direction by a preset second length along the vertical axis as the vertical movement by the sensor unit, and detect a third movement m₃ of the target object 500 in a left direction by a preset third length along the horizontal axis or a fourth movement m₄ of the target object 500 in a right direction by a preset fourth length along the horizontal axis as the horizontal movement by the sensor unit.

In the electronic device 10 according to an embodiment of the disclosure, the at least one processor 110 may be configured to obtain the pattern by a combination of an occurrence order or occurrence count of the first movement m₁, the second movement m₂, the third movement m₃, or the fourth movement m₄.

In the electronic device 10 according to an embodiment of the disclosure, the at least one processor 110 may be configured to, if the display area is rectangular, set a first corner 245 and a second corner 243 which are at least two corners among four corners 241, 243, 245, 247 included in the edge 230 as the interaction area 240.

In the electronic device 10 according to an embodiment of the disclosure, the at least one processor 110 may be configured to detect a first movement m₃₁ of the target object 500 in an upper direction along a first vertical axis of the first corner 245, detect a second movement m₃₂ of the target object 500 in a lower direction along the first vertical axis, detect a third movement m₃₃ of the target object 500 in a left direction along a first horizontal axis of the first corner 245, detect a fourth movement m₃₄ of the target object 500 in a right direction along the first horizontal axis, detect a fifth movement m₂₁ of the target object 500 in an upper direction along a second vertical axis of the second corner 243, detect a sixth movement m₂₂ of the target object 500 in a lower direction along the second vertical axis, detect a seventh movement m₂₃ of the target object 500 in a left direction along a second horizontal axis of the second corner 243, and detect an eighth movement m₂₄ of the target object 500 in a right direction along the second horizontal axis.

In the electronic device 10 according to an embodiment of the disclosure, the at least one processor 110 may be configured to obtain the pattern by a combination of an occurrence order or occurrence count of the first movement m₃₁, the second movement m₃₂, the third movement m₃₃, the fourth movement m₃₄, the fifth movement m₂₁, the sixth movement m₂₂, the seventh movement m₂₃, or the eighth movement m₂₄.

In the electronic device 10 according to an embodiment of the disclosure, the at least one processor 110 may be configured to control the display unit 120, 210 to display an on-screen keyboard 720 in the display area 220, obtain input information transferred from the display unit 120, 210 as the user manipulates the on-screen keyboard 720, and consider the input information for the user authentication.

In the electronic device 10 according to an embodiment of the disclosure, the at least one processor 110 may be configured to control the sensor unit 140 to detect a width of the target object 500, and consider the detected width of the target object 500 for the user authentication.

In the electronic device 10 according to an embodiment of the disclosure, the sensor unit 140 may include at least one of an infrared sensor module 250 or a touch sensor module 141.

In the electronic device 10 according to an embodiment of the disclosure, the at least one processor 110 may be configured to obtain the pattern corresponding to the movement of the target object 500 in a specific area 281 provided as a portion of the display area 220.

A method for performing user authentication according to an embodiment of the disclosure may comprise displaying 410 a user interface for requesting user authentication in a display area 220, obtaining 420 a pattern corresponding to a target object 500 moving in at least a portion of an edge 230 of the display area 220, and displaying 440 the performing of the user authentication in the display area based on whether 430 the obtained pattern matches a preset target pattern. Here, the pattern may be obtained by a vertical movement or a horizontal movement of the target object 500 detected from at least the portion of the edge 230. The vertical movement may be detected by a movement of the target object 500 along a vertical axis of the edge 230. The horizontal movement may be detected by a movement of the target object 500 along a horizontal axis of the edge 230.

The method for performing the user authentication according to an embodiment of the disclosure may comprise, if the display area is rectangular, setting a lower right corner 245 among four corners 241, 243, 245, 247 included in the edge 230 as an interaction area 240, and obtaining the pattern corresponding to the movement of the target object 500 in the interaction area 240.

The method for performing the user authentication according to an embodiment of the disclosure may comprise detecting a first movement m₁ of the target object 500 in an upper direction by a preset first length along the vertical axis or a second movement m₂ of the target object in a lower direction by a preset second length along the vertical axis as the vertical movement by the sensor unit, and detecting a third movement m₃ of the target object 500 in a left direction by a preset third length along the horizontal axis or a fourth movement m₄ of the target object 500 in a right direction by a preset fourth length along the horizontal axis as the horizontal movement by the sensor unit.

The method for performing the user authentication according to an embodiment of the disclosure may comprise obtaining the pattern by a combination of an occurrence order or occurrence count of the first movement m₁, the second movement m₂, the third movement m₃, or the fourth movement m₄.

The method for performing the user authentication according to an embodiment of the disclosure may comprise, if the display area is rectangular, setting a first corner 245 and a second corner 243 which are at least two corners among four corners 241, 243, 245, 247 included in the edge 230 as the interaction area 240.

The method for performing the user authentication according to an embodiment of the disclosure may comprise detecting a first movement m₁ of the target object 500 in an upper direction by a preset first length along the vertical axis or a second movement m₂ of the target object in a lower direction by a preset second length along the vertical axis as the vertical movement by the sensor unit, and detecting a third movement m₃ of the target object 500 in a left direction by a preset third length along the horizontal axis or a fourth movement m₄ of the target object 500 in a right direction by a preset fourth length along the horizontal axis as the horizontal movement by the sensor unit.

The method for performing the user authentication according to an embodiment of the disclosure may comprise obtaining the pattern by a combination of an occurrence order or occurrence count of the first movement m₁, the second movement m₂, the third movement m₃, or the fourth movement m₄.

The method for performing the user authentication according to an embodiment of the disclosure may comprise, if the display area is rectangular, setting a first corner 245 and a second corner 243 which are at least two corners among four corners 241, 243, 245, 247 included in the edge 230 as the interaction area 240.

The method for performing the user authentication according to an embodiment of the disclosure may comprise detecting a first movement m₃₁ of the target object 500 in an upper direction along a first vertical axis of the first corner 245, detecting a second movement m₃₂ of the target object 500 in a lower direction along the first vertical axis, detecting a third movement m₃₃ of the target object 500 in a left direction along a first horizontal axis of the first corner 245, detect a fourth movement m₃₄ of the target object 500 in a right direction along the first horizontal axis, detecting a fifth movement m₂₁ of the target object 500 in an upper direction along a second vertical axis of the second corner 243, detecting a sixth movement m₂₂ of the target object 500 in a lower direction along the second vertical axis, detecting a seventh movement m₂₃ of the target object 500 in a left direction along a second horizontal axis of the second corner 243, and detecting an eighth movement m₂₄ of the target object 500 in a right direction along the second horizontal axis.

The method for performing the user authentication according to an embodiment of the disclosure may comprise obtaining the pattern by a combination of an occurrence order or occurrence count of the first movement m₃₁, the second movement m₃₂, the third movement m₃₃, the fourth movement m₃₄, the fifth movement m₂₁, the sixth movement m₂₂, the seventh movement m₂₃, or the eighth movement m₂₄.

The method for performing the user authentication according to an embodiment of the disclosure may comprise displaying an on-screen keyboard 720 in the display area 220, obtaining input information according to manipulation of the on-screen keyboard 720, and considering the input information for the user authentication.

The method for performing the user authentication according to an embodiment of the disclosure may comprise detecting a width of the target object 500 and considering the detected width of the target object 500 for the user authentication.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device 100). For example, a processor (e.g., the processor 110) of the machine (e.g., the electronic device 100) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100), comprising:
a display unit (120, 210) configured to include a display area (220) and an edge (230) of the display area (220);
a sensor unit (140) configured to detect a movement of a target object (500) in at least a portion of the edge (230); and
at least one processor (110) electrically connected to the display unit (120, 210) or the sensor unit (140) and configured to perform an interaction with a user, wherein the at least one processor (110) is configured to:
control the display unit (120, 210) to display a user interface for requesting user authentication in the display area (220);
obtain a pattern corresponding to the movement of the target object (500) detected from at least the portion of the edge (230) by the sensor unit (140); and
perform the user authentication in the displayed user interface based on whether the obtained pattern matches a preset target pattern,
wherein the pattern is obtained by a vertical movement or a horizontal movement of the target object (500) detected from at least the portion of the edge (230),
wherein the vertical movement is to be detected by a movement of the target object (500) along a vertical axis of the edge (230), and
wherein the horizontal movement is to be detected by a movement of the target object (500) along a horizontal axis of the edge (230).

2. The electronic device (100) of claim 1, wherein the at least one processor (110) is configured to:
when the display area (220) is rectangular, set a lower right corner (245) among four corners (241, 243, 245, 247) included in the edge (230) as an interaction area (240); and
obtain the pattern corresponding to the movement of the target object (500) in the interaction area (240).

3. The electronic device (100) of claim 1 or 2, wherein the at least one processor (110) is configured to:
detect a first movement (m₁) of the target object (500) in an upper direction by a preset first length along the vertical axis or a second movement (m₂) of the target object in a lower direction by a preset second length along the vertical axis as the vertical movement by the sensor unit; and
detect a third movement (m₃) of the target object (500) in a left direction by a preset third length along the horizontal axis or a fourth movement (m₄) of the target object (500) in a right direction by a preset fourth length along the horizontal axis as the horizontal movement by the sensor unit.

4. The electronic device (100) of claim 3, wherein the at least one processor (110) is configured to obtain the pattern by a combination of an occurrence order or occurrence count of the first movement (m₁), the second movement (m₂), the third movement (m₃), or the fourth movement (m₄).

5. The electronic device (100) of claim 1, wherein the at least one processor (110) is configured to, if the display area is rectangular, set a first corner (245) and a second corner (243) which are at least two corners among four corners (241, 243, 245, 247) included in the edge (230) as the interaction area (240).

6. The electronic device (100) of claim 1, wherein the at least one processor (110) is configured to:
detect a first movement (m₃₁) of the target object (500) in an upper direction along a first vertical axis of the first corner (245);
detect a second movement (m₃₂) of the target object (500) in a lower direction along the first vertical axis;
detect a third movement (m₃₃) of the target object (500) in a left direction along a first horizontal axis of the first corner (245);
detect a fourth movement (m₃₄) of the target object (500) in a right direction along the first horizontal axis;
detect a fifth movement (m₂₁) of the target object (500) in an upper direction along a second vertical axis of the second corner (243);
detect a sixth movement (m₂₂) of the target object (500) in a lower direction along the second vertical axis;
detect a seventh movement (m₂₃) of the target object (500) in a left direction along a second horizontal axis of the second corner (243); and
detect an eighth movement (m₂₄) of the target object (500) in a right direction along the second horizontal axis.

7. The electronic device (100) of claim 6, wherein the at least one processor (110) is configured to obtain the pattern by a combination of an occurrence order or occurrence count of the first movement (m₃₁), the second movement (m₃₂), the third movement (m₃₃), the fourth movement (m₃₄), the fifth movement (m₂₁), the sixth movement (m₂₂), the seventh movement (m₂₃), or the eighth movement (m₂₄).

8. The electronic device (100) of claim 1, wherein the at least one processor (110) is configured to:
control the display unit (120, 210) to display an on-screen keyboard (720) in the display area (220);
obtain input information transferred from the display unit (120, 210) as the user manipulates the on-screen keyboard (720); and
consider the input information for the user authentication.

9. The electronic device (100) of claim 1, wherein the sensor unit (140) includes at least one of an infrared sensor module (250) or a touch sensor module (141), and wherein the at least one processor (110) is configured to:
control the sensor unit (140) to detect a width of the target object (500); and
consider the detected width of the target object (500) for the user authentication.

10. The electronic device (100) of claim 1, wherein the at least one processor (110) is configured to obtain the pattern corresponding to the movement of the target object (500) in a specific area (281) provided as a portion of the display area (220).

11. A method for performing user authentication in an electronic device (100), the method comprising:
displaying (410) a user interface for requesting user authentication in a display area (220);
obtaining (420) a pattern corresponding to a target object (500) moving in at least a portion of an edge (230) of the display area (220); and
displaying (440) a result of the user authentication in the display area based on whether (430) the obtained pattern matches a preset target pattern, wherein the pattern is obtained by a vertical movement or a horizontal movement of the target object (500) detected from at least the portion of the edge (230),
wherein the vertical movement is detected by a movement of the target object (500) along a vertical axis of at least the portion of the edge (230), and
wherein the horizontal movement is detected by a movement of the target object (500) along a horizontal axis of at least the portion of the edge (230).

12. The method of claim 11, comprising:
when the display area is rectangular, setting a lower right corner (245) among four corners (241, 243, 245, 247) included in the edge (230) as an interaction area (240); and
obtaining the pattern corresponding to the movement of the target object (500) in the interaction area (240).

13. The method of claim 11 or 12, wherein obtaining (420) the pattern includes:
detecting a first movement (m₁) of the target object (500) in an upper direction by a preset first length along the vertical axis or a second movement (m₂) of the target object in a lower direction by a preset second length along the vertical axis as the vertical movement;
detecting a third movement (m₃) of the target object (500) in a left direction by a preset third length along the horizontal axis or a fourth movement (m₄) of the target object (500) in a right direction by a preset fourth length along the horizontal axis as the horizontal movement; and
obtaining the pattern by a combination of an occurrence order or occurrence count of the first movement (m₁), the second movement (m₂), the third movement (m₃), or the fourth movement (m₄).

14. The method of claim 11, wherein if the display area is rectangular, a first corner (245) and a second corner (243) which are at least two corners among four corners (241, 243, 245, 247) included in the edge (230) are set as the interaction area (240).

15. The method of claim 11, wherein obtaining (420) the pattern includes:
detecting a first movement (m₃₁) of the target object (500) in an upper direction along a first vertical axis of the first corner (245);
detecting a second movement (m₃₂) of the target object (500) in a lower direction along the first vertical axis;
detecting a third movement (m₃₃) of the target object (500) in a left direction along a first horizontal axis of the first corner (245);
detecting a fourth movement (m₃₄) of the target object (500) in a right direction along the first horizontal axis;
detecting a fifth movement (m₂₁) of the target object (500) in an upper direction along a second vertical axis of the second corner (243);
detecting a sixth movement (m₂₂) of the target object (500) in a lower direction along the second vertical axis;
detecting a seventh movement (m₂₃) of the target object (500) in a left direction along a second horizontal axis of the second corner (243);
detecting an eighth movement (m₂₄) of the target object (500) in a right direction along the second horizontal axis; and
obtaining the pattern by a combination of an occurrence order or occurrence count of the first movement (m₃₁), the second movement (m₃₂), the third movement (m₃₃), the fourth movement (m₃₄), the fifth movement (m₂₁), the sixth movement (m₂₂), the seventh movement (m₂₃), or the eighth movement (m₂₄).
